(19) Europäisches Patentamt
European Patent Office
Office européen des brevets

(11) **EP 3 035 144 B1**

(12) **EUROPÄISCHE PATENTSCHRIFT**

(45) Veröffentlichungstag und Bekanntmachung des Hinweises auf die Patenterteilung:
**22.01.2020  Patentblatt 2020/04**

(51) Int Cl.:
**G05D 23/19** *(2006.01)*  **F24D 19/10** *(2006.01)*
**G01K 17/08** *(2006.01)*

(21) Anmeldenummer: **14198881.6**

(22) Anmeldetag: **18.12.2014**

(54) **Verfahren und Vorrichtungsanordnung zur Steuerung der Heizenergieabgabe in lokalen bis regionalen Wohnraumstrukturen**

Method and device for controlling heat energy output in local and regional housing arrantements.

Procédé et dispositif pour contrôler la décharge d'énergie thermique dans des structures résidentielles locales et régionales

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016  Patentblatt 2016/25**

(73) Patentinhaber:
• **Westsächsische Hochschule Zwickau**
**08056 Zwickau (DE)**
• **METRONA Union GmbH**
**81379 München (DE)**

(72) Erfinder:
• **Prof. Dr. Teich, Tobias**
**08496 Neumark (DE)**

• **Kretz, Daniel**
**08058 Zwickau (DE)**
• **Scharf, Oliver**
**08058 Zwickau (DE)**
• **Dr. Schröder, Franz**
**82054 Sauerlach (DE)**
• **Seeberg, Axel**
**85356 Freising (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A1- 2 219 093        DE-A1-102011 002 411**
**DE-T2- 69 918 379      US-A- 6 145 751**
**US-A1- 2011 230 131**

**Beschreibung**

Die Erfindung betrifft ein Verfahren zur Steuerung der Heizenergieabgabe in lokalen bis regionalen Wohnraumstrukturen. Die Erfindung betrifft ferner eine Vorrichtungsanordnung zur Durchführung eines solchen Verfahrens.

Unter lokalen Wohnraumstrukturen sollen hier einzelne bzw. wenige Wohneinheiten oder in einer Gebäudehülle verstanden werden, während regionale Wohnraumstrukturen eine Vielzahl solcher Einheiten in mehreren benachbarten oder nahe beisammen liegenden Gebäuden sein sollen. Auf eine scharfe Abgrenzung zwischen lokalen und regionalen Wohnraumstrukturen kommt es bei der vorliegenden Erfindung aber gerade nicht an.

Ein Verfahren mit den Merkmalen des Oberbegriffs des Anspruchs 1 ist aus der DE 10 2011 002411 A1 bekannt. Ein Heizkostenverteiler ist in ein Informationstechnologienetzwerk eines Raums, einer Wohnung oder eines Gebäudes eingebunden. Der Nutzer kann durch eine generierte Warnmeldung auf ein geöffnetes Fenster oder eine geöffnete Tür aufmerksam gemacht werden. Die generierte Warnmeldung kann auch an eine Heizungssteuereinheit zur Steuerung des Heizkörpers oder der Heizungsanlage übertragen werden.

EP 2 219 093 A1 zeigt eine Heizungssteuerung, bei welcher die Erfassung der aktuellen Heizleistung durch Heizkostenverteiler vorgenommen wird, die Heizkostenverteiler in einem Funknetz mit einer Zentralstation verbunden sind und die Heizkostenverteiler an der Temperaturreglung beteiligt sind.

DE 699 18 379 T2 zeigt ein Heizungsregelungssystem, bei welchem lernfähige neuronale Netze eingesetzt werden. Das System umfasst eine Bedienereinheit mit Display und Berührungstasten.

US 6 145 751 A zeigt eine Anordnung, bei welcher lernfähige neuronale Netze eingesetzt werden, um eine Heizung zu steuern.

US2011/230131 A1 zeigt eine Heizungsanordnung mit Luftqualitätssensoren.

Aufgabe der Erfindung ist es, eine unter den jeweils gegebenen Umständen möglichst optimale Steuerung der Heizenergieabgabe in einer Wohnraumstruktur zu erreichen.

Gelöst wird diese Aufgabe durch ein Verfahren mit den Merkmalen des Anspruchs 1 sowie durch eine Vorrichtungsanordnung mit den Merkmalen des Anspruchs 7. Vorteilhafte und zweckmäßige Ausgestaltungen des erfindungsgemäßen Verfahrens und der erfindungsgemäßen Vorrichtungsanordnung sind in den zugehörigen Unteransprüchen angegeben.

Das erfindungsgemäße Verfahren zur Steuerung der Heizenergieabgabe in lokalen bis regionalen Wohnraumstrukturen basiert auf einem ubiquitären Sensornetzwerk unter Einbeziehung eines normgerechten Heizkostenverteilungssystems mit elektronischen Heizkostenverteilern, die an Heizflächen einer Wohnraumstruktur angebracht sind und wenigstens einen ersten Temperatursensor zur Erfassung der Temperatur der zugeordneten Heizfläche (Heizkörpertemperatursensor) und einen zweiten Temperatursensor zur Erfassung der Lufttemperatur des Raums (Raumtemperatursensors), in dem sich die Heizfläche befindet, aufweisen. Gemäß der Erfindung werden die von den Sensoren des Sensornetzwerks, einschließlich der Temperatursensoren der elektronischen Heizkostenverteiler, erfassten Messwerte einer Bewertung unterzogen und in die Steuerung der Heizenergieabgabe an die einzelnen Räumen der Wohnraumstruktur, in denen Heizflächen vorhanden sind, einbezogen.

Sinn und Wertschöpfungsidee der Erfindung ist die messtechnische Erhebung und informatische Verarbeitung und Steuerung der Energieabgabeverteilung in mindestens einem Gebäudeobjekt oder in erweiterten Gebäude- oder Quartierstrukturen, wobei auf kurze Zeitskalen abgestellt wird. Mit dem erfindungsgemäßen Verfahren ist es möglich, innerhalb einer umfassenderen intelligenten Infrastruktur (ggf. einer Smart-Grid-Struktur) den momentanen energetischen Zustand einer oder multipler "Heizgemeinschaften" praktisch jederzeit steuerungs- bzw. regelungstechnisch zu unterstützen und nachhaltig zu optimieren. Hierzu wird ein bis dahin unabhängig bestehendes Heizkostenverteilungssystem mit Funkübertragung als parallel-operationelle Teilstruktur in eine besondere Einzelraum-Heizungssteuerung oder -regelung integriert, ohne das Heizkostenverteilungssystem in seiner ursprünglichen Funktionalität gemäß der DIN/EN-Norm 834 in irgendeiner Form einzuschränken.

Wie bereits angedeutet soll die zusätzlich zum Normbetrieb des Heizkostenverteilungssystems vorgesehene Bereitstellung der Temperaturmesswerte durch die elektronischen Heizkostenverteiler für die Steuerung der Heizenergieabgabe auf kürzeren Zeitskalen als die bei der "normalen" Abfrage der Zählfortschritte erfolgen.

Gemäß einem besonderen Aspekt der Erfindung erfolgt die Steuerung der Heizenergieabgabe nach dem Prinzip eines künstlichen neuronalen Netzes. Das bedeutet, dass innovative Algorithmen auf Basis künstlicher Intelligenz zur Optimierung der Einzelraum-Heizanlagensteuerung bzw. -regelung eingesetzt werden. Die Stärke eines künstlichen neuronalen Netzes ist die hochparallele Verarbeitung von Eingabeinformationen, die durch die Verknüpfung der Neuronen und ihrer Verarbeitungsfunktionen ermöglicht wird. Dadurch können sehr komplexe, nicht lineare Abhängigkeiten in den Eingabeinformationen abgebildet werden. Neuronale Netze erlernen diese Abhängigkeiten, was vornehmlich auf der Basis von Erfahrungsdaten geschieht.

Für die Steuerung der Heizenergieabgabe können Informationen über den Öffnungszustand von Fensterflügeln und/oder Außentüren, die über oder nahe von mit elektronischen Heizkostenverteilern bestückten Heizflächen lokalisiert sind, einbezogen werden. Die Besonderheit besteht darin, dass hierfür keine Fensterkontakte oder dergleichen benötigt werden, sondern die Informationen aus den Messwerten der entsprechenden elektronischen Heizkostenverteiler abgeleitet werden.

Der Nutzer der jeweiligen Wohneinheit kann für die Steuerung der Heizenergieabgabe an einem elektronischen Heizkostenverteiler interaktiv einen Raumtemperatursollwert eingeben, der vom elektronischen Heizkostenverteiler per Funk übertragen wird. Eine solche Eingabefunktionalität ist vorteilhaft, weil die Eingabe ohne Mühen suggestiv mehr oder weniger direkt an der Wärmequelle vorgenommen werden kann.

Ein weiterer Aspekt der Erfindung ist das Vorsehen eines einzigen zusätzlichen wohnungsgebundenen Ein-/Ausgabegeräts, das die Anzeige von Raumklimaparametern ermöglicht. An diesem Gerät kann der Nutzer der jeweiligen Wohneinheit interaktiv Eingaben für die Steuerung der Heizenergieabgabe vornehmen. Ein solches Gerät ersetzt mehrere Einzelraumgeräte.

Gemäß dem Bedienkonzept der Erfindung stellt der Nutzer der jeweiligen Wohneinheit einen Raumtemperatursollwert an einem elektronischen Heizkostenverteiler oder an einem Stellventil eines Heizkörpers mit zwei gegenüberliegenden, vorzugsweise berührungsempfindlichen Eingabesensoren durch eine oder mehrere Doppelberührungen ein. Der aktuell eingestellte Raumtemperatursollwert wird absolut (z. B. als konkreter Zahlenwert) und/oder relativ (z. B. als Markierung auf einer Skala) in einem Display angezeigt.

Die Erfindung schafft auch eine Vorrichtungsanordnung mit mehreren in einer lokalen oder regionalen Wohnraumstruktur angeordneten Sensorvorrichtungen, einschließlich elektronischer Heizkostenverteiler, die an Heizflächen einer Wohnraumstruktur angebracht sind und wenigstens einen ersten Temperatursensor zur Erfassung der Temperatur der zugeordneten Heizfläche und einen zweiten Temperatursensor zur Erfassung der Lufttemperatur des Raums, in dem sich die Heizfläche befindet, aufweisen. Die Komponenten der Vorrichtungsanordnung sind zur Durchführung des oben definierten erfindungsgemäßen Verfahrens zur Steuerung der Heizenergieabgabe eingerichtet.

Wenigstens ein Teil der elektronischen Heizkostenverteiler der erfindungsgemäßen Vorrichtungsanordnung sollte über eine interaktive Eingabefunktionalität und eine Übertragungsfunktionalität für einen Raumtemperatursollwert verfügen.

Vorteilhaft ist ein wohnungsgebundenes Ein-/Ausgabegerät zur Anzeige von Raumklimaparametern und zur interaktiven Eingabe von Parametern für die Steuerung der Heizenergieabgabe, wobei das Ein-/Ausgabegerät über einen Funkdatentransceiver verfügt oder an einen Funkdatentransceiver angebunden ist. Ein solches Gerät stellt eine zusätzliche ausgewiesene ubiquitäre Komponente dar und ersetzt drahtgebundene Installationen von Schaltern und Anzeigen in einzelnen Räumen.

Für die Realisation des erfindungsgemäßen Bedienkonzepts weist wenigstens ein Teil der elektronischen Heizkostenverteiler oder wenigstens ein Teil der Heizkörperstellventile in einer Wohneinheit zwei gegenüberliegende, vorzugsweise berührungsempfindliche Eingabesensoren auf, die durch eine oder mehrere Doppelberührungen eine Eingabe eines Raumtemperatursollwerts ermöglichen. Es können anstelle von berührungsempfindlichen Eingabesensoren natürlich auch druckempfindliche Schalter verwendet werden. Außerdem umfasst die erfindungsgemäße Vorrichtungsanordnung ein Display zur absoluten und/oder relativen Anzeige des aktuell eingestellten Raumtemperatursollwerts.

Allgemein schafft die Erfindung neben den steuerungs- bzw. regelungstechnischen Vorteilen auch finanzielle Synergieeffekte durch die Mehrfachnutzung bestimmter ubiquitärer Einzelgeräte, die als Sensoren für mehrere Parameter dienen und zusätzliche Funktionalitäten bieten. Abgesehen von der Verwendung avancierter Steuerungs- bzw. Regelungsalgorithmen und unüblichen Sensorkonfigurationen dient die erfindungsgemäße Systemlösung somit auch der Erschließung substantieller wirtschaftlicher Einsparpotentiale schon bei der anfänglichen technischen Grundausstattung von Gebäuden mit Einzelraum-Heizungssteuerungen bzw. -regelungen. Insgesamt kann sich durch die Realisierung der erfindungsgemäßen Systemkonstellation ein Einsparpotential allein bei der technischen Geräteausrüstung von über 60 % - verglichen mit heute handelsüblicher Geräteausrüstung für Einzelraum-Heizungssteuerungen bzw. -regelungen - ergeben.

Weitere Merkmale und Vorteile der Erfindung ergeben sich aus der nachfolgenden Beschreibung und aus den beigefügten Zeichnungen, auf die Bezug genommen wird. In den Zeichnungen zeigen beispielhaft:

- Figur 1 verschiedene Fensteröffnungsszenarien, die durch Auswertung von Messwerten der Sensoren eines elektronischen Heizkostenverteilers erkannt werden;

- Figur 2 ein interaktives Nutzerpanel mit Anzeige- und Eingabefunktionen für eine Nutzeinheit;

- Figur 3 eine bevorzugte Ausführungsform eines elektronischen Heizkostenverteilers zur Verwendung im Rahmen des erfindungsgemäßen Verfahrens; und

- Figur 3a eine Draufsicht auf den elektronischen Heizkostenverteiler aus Figur 3.

Im Folgenden werden ein auf einem ubiquitären Sensornetzwerk basierendes Verfahren zur Steuerung der Heizenergieabgabe in lokalen bis regionalen Wohnraumstrukturen sowie eine zur Durchführung dieses Verfahrens eingerichtete Vorrichtungsanordnung beschrieben.

Wie eingangs bereits erläutert sollen mehrere Wohneinheiten in die Steuerung einbezogen werden. Das bedeutet einerseits, dass im Idealfall die Heizenergieabgabe jeder einzelnen Heizfläche jeder Wohneinheit gesteuert wird, und andererseits, dass möglichst viele Sensormesswerte in das Steuerungsverfahren zur Bewertung der regionalen Gegebenheiten (z. B. aktuelle klimatische Bedingungen am Ort der Wohnraumstrukturen) sowie der lokalen Gegebenheiten (z. B. geöffnetes Fenster in einem bestimmten Wohnraum) Eingang finden.

Wesentliche Komponenten, die für die Durchführung des Steuerungsverfahrens genutzt werden, sind ubiquitäre, in einer informatischen Infra- oder Smart-Home-Struktur vernetzte Sensoren, wie etwa für Raumtemperatur, Heizflächentemperatur, Luftqualität, Fensterkontakte etc., sowie vom Nutzer der jeweiligen Wohneinheit bedienbare oder per Funk ansteuerbare Stellglieder, insbesondere zur Eingabe bzw. Einstellung eines Raumtemperatursollwerts oder einer Heizenergieabgabemenge/rate. Je nach Ausstattung der Wohneinheiten können auch vernetzte Sensoren zur Erfassung von Ventilstellungen oder anderer Betriebsparameter vorgesehen sein. Die Vernetzung der Sensoren kann grundsätzlich kabelgebunden und/oder drahtlos realisiert sein. Jedenfalls können die Messwerte aller Sensoren bzw. alle vom Nutzer vorgenommenen Einstellungen einer (übergeordneten) Steuereinrichtung zugänglich gemacht werden, die nicht zwingend eine zentrale Einheit sein muss, sondern grundsätzlich auch eine Mehrzahl dezentraler Steuereinheiten umfassen kann.

Besonders hervorzuheben als Teil des ubiquitären Netzwerks sind normgerecht installierte und normgerecht betriebene elektronische Heizkostenverteiler, die nach dem sogenannten Zweifühler-Messprinzip arbeiten und dementsprechend wenigstens über einen ersten Temperatursensor zur Erfassung der Temperatur der zugeordneten Heizfläche (Heizkörpertemperatur) und einen zweiten Temperatursensor zur Erfassung der Lufttemperatur des Raums (Raumtemperatur), in dem sich die Heizfläche befindet, verfügen. Diese elektronischen Heizkostenverteiler sind Teil eines normgerecht betriebenen Heizkostenverteilungssystems.

Die elektronischen Heizkostenverteiler sind in der Lage, zusätzlich zur Bestimmung, Anzeige und Übermittlung des Zählfortschritts gemäß der einschlägigen DIN/EN-Norm 834 die Temperaturmesswerte ihrer Sensoren und/oder zeitliche Ableitungen hiervon direkt oder indirekt an die Steuereinrichtung und/oder andere Netzwerkknoten zu übertragen. Die Erhebung und Bereitstellung aktueller Messwerte erfolgt in vergleichsweise kurzen Zeitabständen, d. h. im Sekunden-, Minuten- oder Stundenbereich. Jedenfalls sind die Zeitskalen deutlich kürzer als bei einer regulären Übertragung des Zählfortschritts an einen Dienstleister, die i. d. R. monatlich oder in noch größeren Zeitabständen erfolgt. Diese Zusatzfunktionalität zur Bereitstellung diverser Eingangsparameter und Zustandsinformationen auf kurzen Zeitskalen ist wesentlicher Bestandteil des hier vorgestellten Steuerungsverfahrens.

Die elektronischen Heizkostenverteiler können darüber hinaus weitere Funktionalitäten zur Erfassung und Bereitstellung von Zustandsinformationen aufweisen. In jedem Fall lassen sich zumindest einige Zustandssensoren, die ansonsten separat bereitzustellen wären, durch die Verwendung entsprechend modifizierter elektronischer Heizkostenverteiler ersetzen. Gleiches gilt auch für Bedienelemente zur Eingabe von Sollwerten oder ähnlichem durch den Nutzer der jeweiligen Wohneinheit, die ebenfalls an die Steuereinrichtung übertragen werden. Hierauf wird später noch anhand eines konkreten Beispiels genauer eingegangen.

Zumindest ein Teil der Sensoren, Bedienelemente, Stellglieder und die Steuereinrichtung sind als künstliches neuronales Netz organisiert. Die Sensoren, Bedienelemente und Stellglieder und gegebenenfalls weitere Verarbeitungseinheiten repräsentieren Neuronen, die über Kommunikationskanäle untereinander verknüpft sind. Eingabeinformationen in Form von Messwerten der Sensoren, vom Nutzer vorgenommene und sonstige aktuelle Einstellungen werden innerhalb des Netzes von den Neuronen i. d. R. über nicht lineare Funktionen verarbeitet. Das Ergebnis wird über die Kommunikationskanäle an andere Neuronen weiterpropagiert. Die Ausgabeinformationen stellen das Ergebnis der Verarbeitungsprozesse und die Grundlage für die Bestimmung bzw. Einstellung der unter den gegebenen Umständen optimalen Heizenergieabgabe an den einzelnen Heizflächen dar.

Optionale Komponenten der Vorrichtungsanordnung sind interaktive Geräte (Panels), die zur Anzeige von insbesondere aktuellen Zustandswerten und -informationen sowie zur Dateneingabe durch den Nutzer verwendet werden. Es kann theoretisch für jeden einzelnen Raum ein solches Ein-/Ausgabegerät vorgesehen sein. Vorteilhaft ist aber das Vorsehen nur eines einzigen wohnungsgebundenen Ein-/Ausgabegeräts, das über einen Funkdatentransceiver verfügt oder an einen solchen angebunden ist und drahtgebundene Installationen, wie etwa Schalter und Anzeigen, in den einzelnen Räumen entbehrlich macht.

Mit einem Aufbau, wie er oben geschildert ist, lässt sich eine messtechnische Erhebung und informatische Verarbeitung und Steuerung der Energieabgabeverteilung in mindestens einem Gebäudeobjekt oder in erweiterten Gebäude- oder Quartierstrukturen auf kurzer Zeitskala realisieren. Innerhalb einer umfassenderen intelligenten Infrastruktur (ggf. Smart-Grid-Struktur) lässt sich der momentane energetischen Zustand einer oder multipler "Heizgemeinschaften" steuerungs- bzw. regelungstechnisch unterstützen und nachhaltig zu verbessern. Hierzu werden besondere Algorithmen auf Basis eines künstlichen neuronalen Netzes zur Optimierung der Heizanlagensteuerung bzw. -regelung für die Einzelräume genutzt.

Konkrete Maßnahmen beim Aufbau des Netzwerkes sind u. a. die Belegung der üblicherweise bereits vorhandenen oder ohnehin vorzusehenden elektronischen Heizostenverteiler mit den genannten Zusatzfunktionalitäten für das Erfassen und Übermitteln von effektiver Raumtemperatur ($T_L$) und effektiver Heizflächentemperatur ($T_H$). Die effektiven Temperaturen sind keine Momentaufnahmen, sondern jeweils ein Mittelwert von vielfach innerhalb eines variabel konfigurierbaren Zeitintervalls, z. B. 30 Minuten, gemessenen Temperaturwerten. Des Weiteren findet ein Öffnungsstatus-Monitoring für nahe von Heizflächen angeordnete Fensterflügel und/oder Außentüren statt, insbesondere mittels einer Auswertung der Messwerte der elektronischen Heizkostenverteiler, wie später noch genauer erläutert wird. Dem Nutzer steht außerdem eine interaktive Eingabefunktionalität für den Raumtemperatursollwert über die elektronischen Heizkostenverteiler oder über die Heizkörperstellventile zur Verfügung, worauf ebenfalls später noch genauer eingegangen wird.

Weiterhin kann - auch optional - durch die Einbindung je eines wohnungsgebundenen Ein-/Ausgabegeräts mit angebundenem Funkdatentransceiver (als zusätzliche ubiquitäre Komponente) und einem interaktive Bedienpanel, auf zusätzliche drahtgebundene Installationen von Schaltern, Reglern und Anzeigen in den einzelnen Räumen verzichtet werden.

Nachfolgend wird beispielhaft ein für die Steuerung der Heizenergieabgabe verwendeter Algorithmus des künstlichen neuronalen Netzes näher beschrieben.

Der Algorithmus bestimmt bedarfsabhängig den optimalen Einschaltzeitpunkt ($t^*_{Einschalten}$) des Stellantriebs eines Heizkörperventils anhand der ubiquitären Sensordaten der elektronischen Heizkostenverteiler (effektive Raumtemperatur $T_L$ und effektive Heizkörpertemperatur $T_H$) sowie Außentemperatur und Wind am Standort des Gebäudes. Klimatische Eingangsgrößen können auch von einem Klimamodell basierend auf einer Vielzahl von Wetterstationen geliefert werden. Der Algorithmus kompensiert mangelndes Vorwissen über nichtlineare Kausalitäten im thermodynamischen System und verfügt sowohl über die notwendige Robustheit gegenüber einer unvollständigen Datenbasis im Steuerungs- bzw. Regelungssystem als auch über eine Lern- und Generalisierungsfähigkeit.

Der Algorithmus arbeitet bevorzugt nach dem Backpropagation-Prinzip. Das künstliche neuronale Netzwerk besteht aus einer Eingabeschicht von Inputneuronen, einer Ausgabeschicht von Outputneuronen und zwei Zwischenschichten mit einer Anzahl von nicht mehr als 200 % Neuronen der Summe von Input- und Outputneuronen. Der Algorithmus startet den Vorgang des Lernens der Netzgewichte auf der Basis der in der Funkempfangseinheit gespeicherten Daten neu, wenn ein signifikanter Netzfehler festgestellt wird.

Die zentrale Aufgabe der Steuerung bzw. Regelung besteht darin, zyklisch zu jedem Zeitpunkt $t_{aktuell}$ zu überprüfen, ob die vom Regler ermittelte Zeitspanne $\Delta t$ für den Aufheizvorgang ($t_{Sollwert}$ - $t^*_{Einschalten}$) größer als die verbleibende Restzeit ($t_{Sollwert}$ - $t_{aktuell}$) ist. Im negativen Fall erfolgt mittels Clipping das Einschalten des Stellantriebs und nach einer hinreichenden Annäherung an die Solltemperatur zur Verhinderung eines Überschwingens die Umschaltung auf eine konventionelle PI-Regelung (proportional-integral controlling).

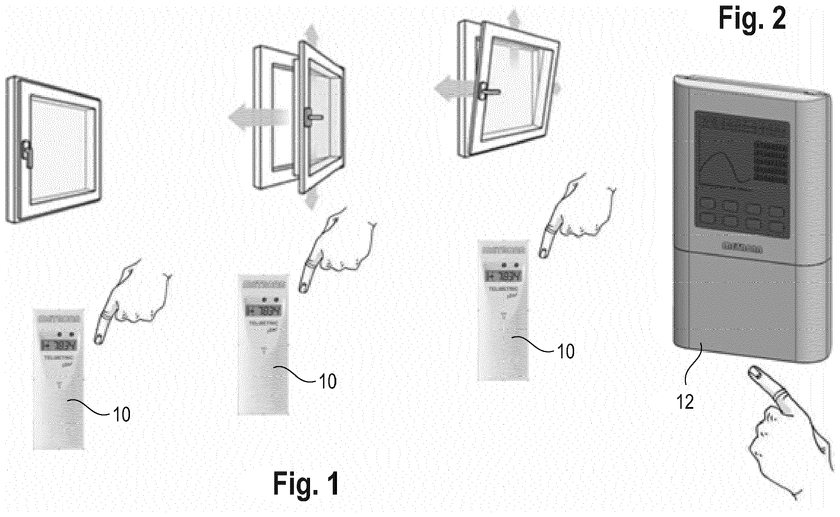

In Figur 1 sind verschiedene Fensteröffnungsszenarien dargestellt, die ein mit Zusatzfunktionalitäten ausgestatteter elektronischer Heizkostenverteiler 10 erkennen kann. Hierauf wird gleich genauer eingegangen. Der elektronische Heizkostenverteiler 10 liefert eine zyklische Anzeige von Raumtemperatur und Heizkörpertemperatur und kann entweder selbst ein Raumtemperatur-Derivat $f\{d/dt(T_L), d/dt(T_H)\}$ bilden oder liefert die Messwerte hierfür. Außerdem ist am elektronischen Heizkostenverteiler 10 eine interaktive Einstellung der Raumtemperatursollwert durch den Nutzer möglich. Figur 2 zeigt ein interaktives Ein-/Ausgabegerät 12 (Panel) mit Anzeige- und Eingabefunktionen und einem Funkdatentransceiver für eine Wohneinheit.

Nachfolgend wird die Überwachung von Fensterflügeln bzw. Außentüren mithilfe eines modifizierten elektronischen Heizkostenverteilers 10 erläutert. Bei hinreichend kalten Außentemperaturen bewirkt das Öffnen von Fensterflügeln eine hinreichend schnelle und deutliche Abkühlung des Raumtemperatursensors TRF, die insbesondere als Derivat $f\{d/dt(T_L)\}$ quantifizierbar ist und sich weiterhin durch das Fehlen eines gleichzeitigen Temperaturanstiegs am Heizkörpertemperatursensor THF auszeichnet: $d/dt(T_H) < x$ [K].

Unterhalb einer bestimmten Außentemperatur $T_{außen}$ lässt sich demnach durch die gleichzeitige Auswertung beider Sensoren TRF, THF und deren Derivate das Öffnen und andauerndes Offenstehen von Fensteröffnungen ausreichend sicher identifizieren. Eine entsprechende ereignisgebundene "logistische" Funktion ist determiniert etwa durch folgende Abhängigkeiten:

$$f\{THF_i,\ TRF_i,\ T_{Hi},\ T_{Li},\ d/dt_i(THF),\ d/dti(TRF)\}\quad \text{für typisch } I = 1\dots3$$

für das Öffnen und für das Andauern des Öffnungszustandes durch:

$$f(T_{Hi},\ T_{Li},\ (T_{Hi}-T_{Li}))\quad \text{für } i = 1\dots n\quad \text{mit } n > 10$$

Teilweise und vollständig geöffnete Fensterflügel lassen sich durch dieses Verfahren zwar weniger exakt ermitteln als durch spezielle, eigens dafür vorgesehene Fensterstatuskontakte, vermitteln aber durch Kontraste und unterschiedliche Dynamik von Raumtemperatur $T_L$ und Heizkörpertemperatur $T_H$ zu bekannten bzw. "gelernten" typischen Raumtemperaturen und anliegenden Außentemperaturen ein gut zu bewertendes Bild von den aktuellen Energieströmen und Energieleckagen, auf die primär eine Heizungssteuerung bzw. -regelung reagieren darf und sollte. Das bedeutet, dass diese situativ weniger exakte Sensorik im Hinblick auf die Öffnung von Fenstern unter Umständen sogar besser und treffsicherer funktioniert, da die sogar quantitativ mögliche Bewertung der beobachteten Temperaturkontraste auch eine abgestufte - d. h. differenzierte und der Energieleckage angemessene - Reaktion der Heizungssteuerung bzw. -regelung zulässt. Zusammengefasst repräsentiert also die besondere Zusatzverwendung von Temperatursignalen von elektronischen Heizkostenverteilern als "Fensterwächter" eine "weniger digitale" und damit eine für eine wirksamere Steuerung bzw. Regelung zweckmäßigere Sensorik als gegenwärtig übliche Fensterkontakte.

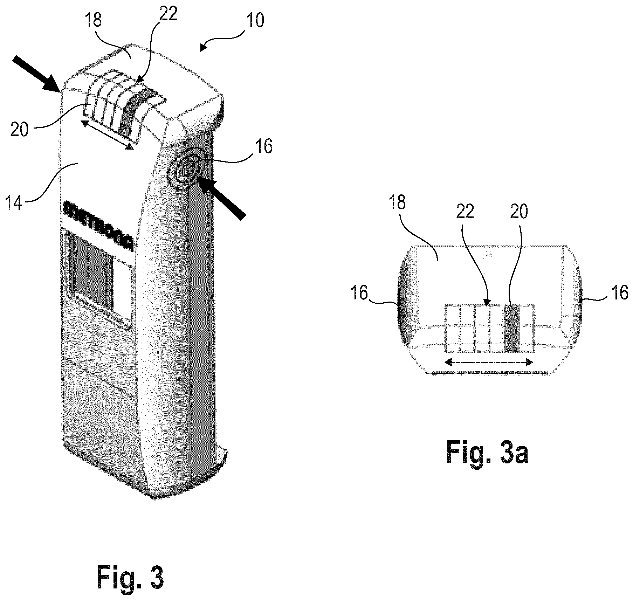

In Figur 3 ist beispielhaft ein elektronischer Heizkostenverteiler 10 gezeigt, mit dem suggestiv eine ergonomisch besonders einfache Eingabe eines Sollwertes für die Raumtemperatur nahe der zuständigen Heizstelle ermöglicht werden soll. Die nachfolgend im Detail beschriebene Eingabemöglichkeit kann auch direkt an einem Stellventil eines Heizkörpers vorgesehen sein.

Der elektronische Heizkostenverteiler 10 verfügt über einen besonderen berührungsgesteuerten Funktionsmechanismus für die Eingabe eines Raumtemperatursollwerts, der gleichzeitig einen besseren Schutz vor einer unbeabsichtigten Fehlbedienung bietet. Am oberen Abschnitt des Gehäuses 14 des elektronischen Heizkostenverteilers 10 sind an den entgegengesetzten Seitenflächen zwei berührungsempfindliche Eingabesensoren 16 vorgesehen. Wenigstens auf der oberen horizontalen Stirnfläche 18 des Gehäuses 14 ist ein Display 22 angeordnet. Das Display 22 ist in mehrere Segmente 20 von "kalt" nach "warm" unterteilt und dient zur Anzeige des eingestellten Sollwerts, wie insbesondere in Figur 3a zu erkennen ist. Dank der Ausrichtung oder Teilausrichtung nach oben ist das Display 22 leicht abzulesen. Das Display 22 kann alternativ auch einen Zahlenwert und/oder zusätzlich die aktuelle Raumtemperatur anzeigen.

Die vorgesehene Sollwerteingabe am elektronischen Heizkostenverteiler 10 erfolgt durch beidseitige Berührung der am oberen Gehäuseabschnitt angeordneten Eingabesensoren 16. Der angezeigte Sollwert wandert über die Segmente 20 des Displays 22 von kalt nach warm, um je einen Schritt bei jeder kurzzeitigen Berührung und fortlaufend, solange beide Finger am Gehäuse verweilen. Die Einstellung bleibt fix, sobald die Doppelberührung gelöst wird.

Die Bedienung ist also in den meisten Fällen mit gesenktem Arm - ohne zusätzliches Herunterbücken zum Heizkörper - mittels Daumen und einem zweiten Finger möglich. Dies ist ergonomisch so bequem wie möglich und kommt gerade gebrechlichen Personen entgegen.

Wie bereits erwähnt kann das gleiche Prinzip - gegebenenfalls geometrisch leicht modifiziert - alternativ zur Anwendung bei einer Sollwerteinstellung direkt am Stellventil des Heizkörpers. Der Raumtemperatursollwert wird dabei vorzugsweise nicht numerisch angezeigt oder vorgegeben, sondern lässt sich in einem zuvor vereinbarten Intervall in einer gewissen Anzahl von Schritten erhöhen oder absenken. Zweckmäßigerweise erlaubt die gekoppelte Anzeige ausschließlich die Anzeige dieser Schritte, beispielsweise in Form von Punkten entlang einer farbigen Skala.

Weitere optionale Funktionalitäten die einzeln oder gemeinsam im elektronischen Heizkostenverteiler 10 oder im Ein-/Ausgabegerät 12 integriert sein können, beinhalten einen Luftqualitätssensor ($CO_2$-Sensor) und einen Feuchtesensor.

Grundsätzlich ist die Erfindung nicht auf Wohneinheiten beschränkt, sondern lässt sich auch auf Gewerbeeinheiten übertragen.

Bezugszeichenliste

| | |
|---|---|
| 10 | elektronischer Heizkostenverteiler |
| 12 | Ein-/Ausgabegerät |
| 14 | Gehäuse |
| 16 | Eingabesensoren |
| 18 | Stirnfläche |
| 20 | Segmente |
| 22 | Display |

**Patentansprüche**

**1.** Verfahren zur Steuerung der Heizenergieabgabe in lokalen bis regionalen Wohnraumstrukturen, basierend auf einem ubiquitären Sensornetzwerk unter Einbeziehung eines normgerechten Heizkostenverteilungssystems mit elektronischen Heizkostenverteilern (10), die an Heizflächen einer Wohnraumstruktur angebracht sind und wenigstens einen ersten Temperatursensor zur Erfassung der Temperatur der zugeordneten Heizfläche und einen zweiten Temperatursensor zur Erfassung der Lufttemperatur des Raums, in dem sich die Heizfläche befindet, aufweisen, wobei die von den Sensoren des Sensornetzwerks, einschließlich der Temperatursensoren der elektronischen Heizkostenverteiler (10), erfassten Messwerte einer Bewertung unterzogen und in die Steuerung der Heizenergieabgabe an die einzelnen Räumen der Wohnraumstruktur, in denen Heizflächen vorhanden sind, einbezogen werden, **dadurch gekennzeichnet, dass** der Nutzer der jeweiligen Wohneinheit einen Raumtemperatursollwert an einem elektronischen Heizkostenverteiler (10) oder an einem Stellventil eines Heizkörpers mit zwei gegenüberliegenden, vorzugsweise berührungsempfindlichen Eingabesensoren (16) durch eine oder mehrere Doppelberührungen einstellt, wobei der aktuell eingestellte Raumtemperatursollwert absolut und/oder relativ in einem Display (22) angezeigt wird.

2. Verfahren nach Anspruch 1, **dadurch gekennzeichnet, dass** die Bereitstellung der Temperaturmesswerte durch die elektronischen Heizkostenverteiler (10) für die Steuerung zusätzlich zum Normbetrieb des Heizkostenverteilungssystems auf kürzeren Zeitskalen erfolgt.

3. Verfahren nach Anspruch 1 oder 2, **dadurch gekennzeichnet, dass** die Steuerung der Heizenergieabgabe nach dem Prinzip eines künstlichen neuronalen Netzes erfolgt.

4. Verfahren nach einem der vorhergehenden Ansprüche, **dadurch gekennzeichnet, dass** für die Steuerung der Heizenergieabgabe Informationen über den Öffnungszustand von Fensterflügeln und/oder Außentüren, die über oder nahe von mit elektronischen Heizkostenverteilern (10) bestückten Heizflächen lokalisiert sind, einbezogen werden, wobei die Informationen aus den Messwerten dieser elektronischen Heizkostenverteiler (10) abgeleitet werden.

5. Verfahren nach einem der vorhergehenden Ansprüche, **dadurch gekennzeichnet, dass** für die Steuerung der Heizenergieabgabe vom Nutzer der jeweiligen Wohneinheit an einem elektronischen Heizkostenverteiler (10) interaktiv einen Raumtemperatursollwert eingegeben und vom elektronischen Heizkostenverteiler (10) per Funk übertragen wird.

6. Verfahren nach einem der vorhergehenden Ansprüche, **dadurch gekennzeichnet, dass** vom Nutzer der jeweiligen Wohneinheit an einem einzigen zusätzlichen wohnungsgebundenen Ein-/Ausgabegerät (12), das die Anzeige von Raumklimaparametern ermöglicht, interaktiv Eingaben für die Steuerung der Heizenergieabgabe vorgenommen werden.

7. Vorrichtungsanordnung, mit mehreren in einer lokalen oder regionalen Wohnraumstruktur angeordneten Sensorvorrichtungen, einschließlich elektronischer Heizkostenverteiler (10), die an Heizflächen einer Wohnraumstruktur angebracht sind und wenigstens einen ersten Temperatursensor zur Erfassung der Temperatur der zugeordneten Heizfläche und einen zweiten Temperatursensor zur Erfassung der Lufttemperatur des Raums, in dem sich die Heizfläche befindet, aufweisen, **dadurch gekennzeichnet, dass** die Komponenten der Vorrichtungsanordnung zur Durchführung des Verfahrens zur Steuerung der Heizenergieabgabe nach einem der vorhergehenden Ansprüche eingerichtet sind, dass wenigstens ein Teil der elektronischen Heizkostenverteiler (10) oder wenigstens ein Teil der Heizkörperstellventile in einer Wohneinheit zwei gegenüberliegende, vorzugsweise berührungsempfindliche Eingabesensoren (16) aufweist, die durch eine oder mehrere Doppelberührungen eine Eingabe eines Raumtemperatursollwerts ermöglichen, und dass die Vorrichtungsanordnung ein Display (22) zur absoluten und/oder relativen Anzeige des aktuell eingestellten Raumtemperatursollwerts umfasst.

8. Vorrichtungsanordnung nach Anspruch 7, **dadurch gekennzeichnet, dass** wenigstens ein Teil der elektronischen Heizkostenverteiler (10) über eine interaktive Eingabefunktionalität und eine Übertragungsfunktionalität für einen Raumtemperatursollwert verfügen.

9. Vorrichtungsanordnung nach Anspruch 7 oder 8, **gekennzeichnet durch** ein zusätzliches wohnungsgebundenes Ein-/Ausgabegerät (12) zur Anzeige von Raumklimaparametern und zur interaktiven Eingabe von Parametern für die Steuerung der Heizenergieabgabe, wobei das Ein-/Ausgabegerät (12) über einen Funkdatentransceiver verfügt oder an einen Funkdatentransceiver angebunden ist.

**Claims**

1. A method of controlling the heat energy output in local to regional housing structures, based on a ubiquitous sensor network by including a standardized heating cost allocation system comprising electronic heating cost allocators (10) which are mounted on heating surfaces of a housing structure and include at least one first temperature sensor for detecting the temperature of the associated heating surface and a second temperature sensor for detecting the air temperature of the room in which the heating surface is located, wherein the measured values detected by the sensors of the sensor network, including the temperature sensors of the electronic heating cost allocators (10), are evaluated and included in the control of the heat energy output to the individual rooms of the housing structure in which heating surfaces are present, **characterized in that** the user of the respective housing unit sets a room temperature setpoint on an electronic heating cost allocator (10) or on a control valve of a radiator with two opposite, preferably touch-sensitive input sensors (16) by one or more double touches, wherein the currently set room temperature setpoint is indicated on a display (22) as an absolute and/or relative value.

2. The method according to claim 1, **characterized in that** the provision of the measured temperature values by the electronic heating cost allocator (10) for control purposes in addition to the standard operation of the heating cost allocation system is effected on shorter time scales.

3. The method according to claim 1 or 2, **characterized in that** the control of the heat energy output is effected according to the principle of an artificial neural network.

4. The method according to any of the preceding claims, **characterized in that** for the control of the heat energy output information on the opening state of window sashes and/or outside doors, which are localized above or close to heating surfaces equipped with electronic heating cost allocators (10), is included, wherein the information is derived from the measured values of these electronic heating cost allocators (10).

5. The method according to any of the preceding claims, **characterized in that** for the control of the heat energy output a room temperature setpoint is interactively entered by the user of the respective housing unit on an electronic heating cost allocator (10) and transmitted from the electronic heating cost allocator (10) via radio.

6. The method according to any of the preceding claims, **characterized in that** on a single additional housing-related input/output device (12), which provides for the display of room climate parameters, the user of the respective housing unit interactively makes entries for the control of the heat energy output.

7. A device assembly, comprising a plurality of sensor devices arranged in a local or regional housing structure, including electronic heating cost allocators (10) which are mounted on heating surfaces of a housing structure and include at least one first temperature sensor for detecting the temperature of the associated heating surface and a second temperature sensor for detecting the air temperature of the room in which the heating surface is located, **characterized in that** the components of the device assembly are equipped for carrying out the method of controlling the heat energy output according to any of the preceding claims, that at least part of the electronic heating cost allocators (10) or at least part of the radiator control valves in a housing unit includes two opposite, preferably touch-sensitive input sensors (16) which by one or more double touches allow entry of a room temperature setpoint, and that the device assembly comprises a display (22) for the absolute and/or relative indication of the currently set room temperature setpoint.

8. The device assembly according to claim 7, **characterized in that** at least part of the electronic heating cost allocators (10) are provided with an interactive input functionality and a transmission functionality for a room temperature setpoint.

9. The device assembly according to claim 7 or 8, **characterized by** an additional housing-related input/output device (12) for indicating room climate parameters and for interactively entering parameters for controlling the heat energy output, wherein the input/output device (12) is provided with a radio data transceiver or is connected to a radio data transceiver.

**Revendications**

1. Procédé de commande de la production d'énergie de chauffage dans des structures de logement locales à régionales, basé sur un réseau de capteurs ubiquitaire en incluant un système de répartition de frais de chauffage conforme aux normes comprenant des répartiteurs de frais de chauffage électroniques (10) qui sont montés sur des surfaces de chauffage d'une structure de logement et présentent au moins un premier capteur de température pour saisir la température de la surface de chauffage associée et un deuxième capteur de température pour saisir la température de l'air de la pièce dans laquelle se trouve la surface de chauffage, les valeurs mesurées saisies par les capteurs du réseau de capteurs, y compris les capteurs de température des répartiteurs de frais de chauffage électroniques (10), étant soumises à une évaluation et étant prises en compte dans la commande de la production d'énergie de chauffage dans les différentes pièces de la structure de logement dans lesquelles se trouvent des surfaces de chauffage, **caractérisé en ce que** l'utilisateur de l'unité d'habitation respective règle une valeur de consigne de température ambiante sur un répartiteur de frais de chauffage électronique (10) ou sur une vanne de régulation d'un radiateur comprenant deux capteurs d'entrée (16) opposés, de préférence tactiles, par un ou plusieurs doubles contacts, la valeur de consigne de température ambiante actuellement réglée étant affichée de manière absolue et/ou relative dans un écran (22).

2. Procédé selon la revendication 1, **caractérisé en ce que** le fournissement des valeurs de température mesurées par les répartiteurs de frais de chauffage électroniques (10) pour la commande est réalisé sur des échelles de temps plus courtes en plus du fonctionnement standard du système de répartition de frais de chauffage.

3. Procédé selon la revendication 1 ou 2, **caractérisé en ce que** la commande de la production d'énergie de chauffage est réalisée selon le principe d'un réseau neuronal artificiel.

4. Procédé selon l'une des revendications précédentes, **caractérisé en ce que** pour la commande de la production d'énergie de chauffage, des informations sur l'état d'ouverture de battants de fenêtres et/ou de portes extérieures situés au-dessus ou à proximité de surfaces de chauffage équipées de répartiteurs de frais de chauffage électroniques (10) sont prises en compte, les informations étant dérivées des valeurs mesurées de ces répartiteurs de frais de chauffage électroniques (10).

5. Procédé selon l'une des revendications précédentes, **caractérisé en ce que** pour la commande de la production d'énergie de chauffage, une valeur de consigne de température ambiante est entrée de manière interactive par l'utilisateur de l'unité d'habitation respective sur un répartiteur de frais de chauffage électronique (10) et transmise par radio par le répartiteur de frais de chauffage électronique (10).

6. Procédé selon l'une des revendications précédentes, **caractérisé en ce que** pour la commande de la production d'énergie de chauffage, des entrées interactives sont effectuées par l'utilisateur de l'unité d'habitation respective sur un seul dispositif d'entrée/de sortie supplémentaire (12) lié à un appartement, lequel permet l'affichage de paramètres de climat ambiant.

7. Agencement de dispositifs, comprenant une pluralité de dispositifs de détection agencés dans une structure de logement locale ou régionale, comprenant des répartiteurs de frais de chauffage électriques (10) qui sont montés sur des surfaces de chauffage d'une structure de logement et présentent au moins un premier capteur de température pour saisir la température de la surface de chauffage associée et un deuxième capteur de température pour saisir la température de l'air de la pièce dans laquelle se trouve la surface de chauffage, **caractérisé en ce que** les composants de l'agencement de dispositifs sont aménagés pour la réalisation du procédé de commande de la production d'énergie de chauffage selon l'une des revendications précédentes, **en ce qu'**au moins une partie des répartiteurs de frais de chauffage électroniques (10) ou au moins une partie des vannes de régulation de radiateur dans une unité d'habitation comporte deux capteurs d'entrée (16) opposés, de préférence tactiles, qui permettent par un ou plusieurs doubles contacts une entrée d'une valeur de consigne de température ambiante, et **en ce que** l'agencement de dispositifs présente un écran (22) pour l'affichage absolu et/ou relatif de la valeur de consigne de température ambiante actuellement réglée.

8. Agencement de dispositifs selon la revendication 7, **caractérisé en ce qu'**au moins une partie des répartiteurs de frais de chauffage électroniques (10) dispose d'une fonctionnalité d'entrée interactive et d'une fonctionnalité de transfert pour une valeur de consigne de température ambiante.

9. Agencement de dispositifs selon la revendication 7 ou 8, **caractérisé par** un dispositif d'entrée/de sortie supplémentaire (12) lié à un appartement pour l'affichage de paramètres de climat ambiant et pour l'entrée interactive de paramètres pour la commande de la production d'énergie de chauffage, le dispositif d'entrée/sortie (12) disposant d'un émetteur-récepteur de données radio ou étant relié à un émetteur-récepteur de données radio.

Fig. 1

Fig. 2

Fig. 3

Fig. 3a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011002411 A1
- EP 2219093 A1
- DE 69918379 T2
- US 6145751 A
- US 2011230131 A1